Europäisches Patentamt

European Patent Office

Office européen des brevets

(11) Publication number: **0 475 537 A2**

## EUROPEAN PATENT APPLICATION

(21) Application number: **91203030.1**

(22) Date of filing: **27.07.87**

(51) Int. Cl.⁵: **E01F 9/01**, G09F 7/22, F16F 1/38, F16F 1/48

This application was filed on 19 - 11 - 1991 as a divisional application to the application mentioned under INID code 60.

(30) Priority: **09.09.86 US 905673**

(43) Date of publication of application:
**18.03.92 Bulletin 92/12**

(60) Publication number of the earlier application in accordance with Art.76 EPC: **0 263 579**

(84) Designated Contracting States:
**DE ES FR GB SE**

(71) Applicant: **MARKETING DISPLAYS INC.**
**24450 Indoplex Circle**
**Farmington Hills Michigan 48024(US)**

(72) Inventor: **Hillstrom, David Uno**
**23058 Gilbar**
**Novi, Michigan 48050(US)**
Inventor: **Cope, Dennis Ray**
**511 Suzanne Drive**
**Kent, Ohio 44240(US)**

(74) Representative: **Williams, Trevor John et al**
**J.A. KEMP & CO. 14 South Square Gray's Inn**
**London WC1R 5LX(GB)**

(54) **Resilient biasing device.**

(57) A resilient biasing device comprises inner and outer sleeves around an annular elastomeric member. The inner sleeve defines fixing points substantially coplanar with the axis of the assembly. The assembly is then cut perpendicular to its axis, and one of the two pieces rotated about an axis neither coplanar nor perpendicular to that defined by the fixing points and the outer sleeve portions of the two sub-assemblies joined. The fixing points are then realigned with the object to be resiliently biased, thus torsionally preloading the two subassemblies in opposite directions.

FIG. 2A.

This application is a divisional of 87306614.6 (EP-A-0263579), and relates to elastomeric members, in particular such members which are torsionally preload. Such torsional preloading may be used in conjunction with compressive preloading.

According to the present invention, there is provided a method of making, a torsionally preloaded torsion spring comprising:

forming a composite axially-elongated generally cylindrical assembly having an outer rigid cylinder fixedly surrounding and attached to an elastomeric cylinder, which is in turn fixedly surrounding and attaching to an inner rigid cylinder, said composite assembly having a pair of opposite free axial ends;

forming axially elongated tabs protruding laterally outwardly in opposite directions from said outer rigid cylinder;

forming mounting holes extending axially through said inner rigid cylinder for mounting a pair of objects to said opposite ends at circumferentially aligned orientations, said circumferential aligned orientations being circumferentially offset at a predetermined acute angular relationship with a first axial plane perpendicular to a second axial plane extending through said tabs on opposite sides of said outer rigid cylinder;

severing said composite assembly generally along a radial plane perpendicular to the axial centerline of said composite assembly and located at an axially intermediate position between the free axial ends of said composite assembly in order to form a pair of axially separable subassemblies;

rotating one of said subassemblies end-for-end in said second axial plane and disposing said rotated subassembly adjacent then non-rotated subassembly and with axially adjacent tabs on opposite lateral sides of said subassemblies being circumferentially aligned with one another in order to circumferentially misalign said mounting holes through said inner rigid cylinder of said respective subassemblies at a predetermined circumferential angular relationship with one another;

rotationally restraining said tabs on said subassemblies with respect to one another;

mounting one of said pair of objects to the free axial end of said inner rigid cylinder of said non-rotated subassembly and mounting the other of said pair of objects to the severed axial end of said inner cylinder of said rotated subassembly with said objects in said predetermined misaligned angular relationship; and

rotating said objects an the respective inner cylinders in opposite directions about their respective axes into a circumferentially aligned relationship with one another in order to torsionally preload said elastomeric cylinders of the respective subassemblies in opposite directions.

Specifically, in one such application a pair of such elastomeric members are provided for allowing the sign to deflect as discussed above, with the elastomeric members being torsionally preloaded in opposite torsional or rotational directions. In such an arrangement, the elastomeric members act essentially "in parallel", with one of the members being torsionally unloaded while the other member is further torsionally loaded during low wind conditions. As the load increases, however, both elastomeric members are torsionally loaded through continued deflection. This arrangement is believed to enhance the durability of the elastomeric members.

The present invention will further be understood from the following description, when taken together with the accompanying drawings which are given by way of example only, and in which:

Figures 1A to 1C illustrate sequential stages in the making of an embodiment of the present invention;

Figures 2A is a partial side elevational view, illustrating a sign stand assembly incorporating the embodiment shown in Figures 1A-1C;

Figure 2B is a view similar to Figure 2A, but illustrating the sign stand assembly after attachment of a sign;

Figure 3 is a partial front elevational view of the sign stand assembly after attachment of the sign.

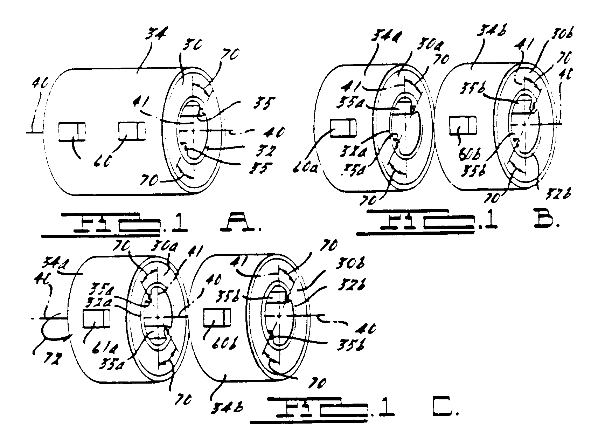

Figures 1A through 3 illustrate the present invention, in which a resilient biasing apparatus includes a pair of elastomeric members acting essentially "in parallel" with one another and torsionally preloaded in opposite torsional, circumferential directions with respect to one another.

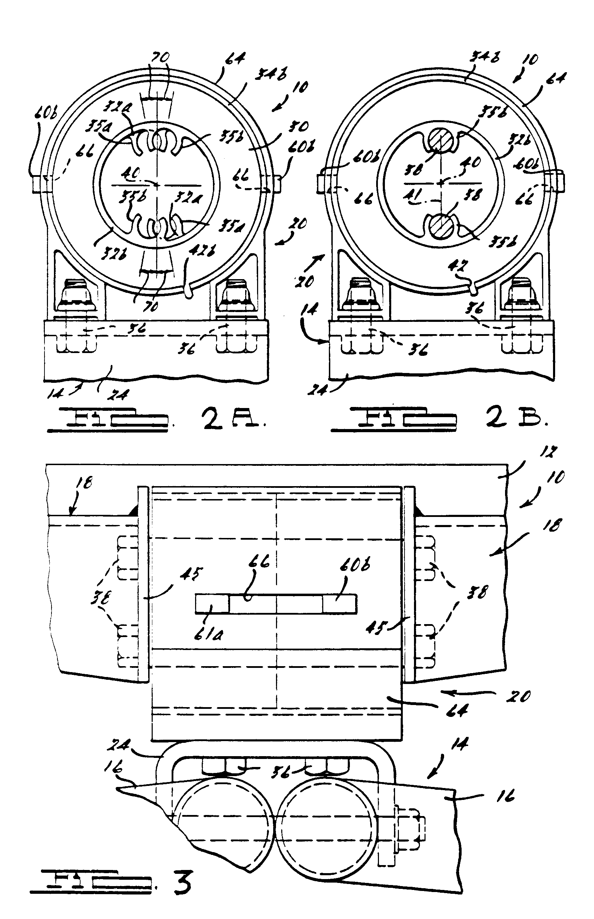

Figures 1A through 1C illustrate the major sequential steps in making a portion of the resilient biasing apparatus 20 shown in Figures 2A through 3 in connection with a sign stand assembly 10. In Figure 1A, an inner sleeve member 32, with mounting bosses 35 thereon, is fixedly secured or bonded to the inner surface of a generally cylindrical elastomeric member 30, which in turn has its outer peripheral surface fixedly secured or bonded to an outer sleeve member 34. The outer sleeve member 34 is provided with a pair of axially-spaced tabs 60 on one radial side, as shown in Figure 1A, and a pair of similar axially-spaced tabs 61 on its outer periphery on the opposite radial side of the outer sleeve member 34. The tabs 61 are not visible in Figures 1A and 1B but their function will become apparent from the discussion below in connection with Figure 1C.

As shown in Figure 1B, the subassembly of Figure 1A is cut or otherwise separated or severed along an axially intermediate, radially-extending plane that is radially perpendicular to the axial centerline or torsional axis 40 of the composite assembly. This operation forms two separate composite subassemblies, one having an outer sleeve member 34A, an elastomeric member 30A, and an inner sleeve member 32a, with the other composite subassembly having an outer sleeve 34b, an elastomeric member 30b, and an inner sleeve member 32b. It is important to note that the bosses 35a and 35b in Figure 1B are still circumferentially oriented at the same angle 70 (preferably approximately 10 degrees) with respect to a vertical plane 41 extending through the centerline or torsional axis 40 as they were in Figure 1A before the composite assembly was severed.

In Figure 1C, one of the halves of the severed composite subassembly has been rotated end-for-end such that its free end is now adjacent the severed end of the other composite subassembly. This results in the bosses 35a lying along a line at the angle 70 in the opposite direction from the vertical plane 41 extending through the centerline or torsional axis 40. In Figure 1C, therefore, one of the tabs 61a that was previously on the opposite side of the outer sleeve member 34a (and not visible in Figures 1A and 1B) is now visible in Figure 15C, due to the end-for-end rotation of the outer sleeve member 34a and its associated components.

In Figure 2A, the severed half-subassemblies shown in Figures 1A through 1C have been repositioned end-to-end (as shown in Figure 1C) and mounted onto a base 14. As can be readily seen in Figure 2A, however, the bosses 35a on the inner sleeve 32a are circumferentially misaligned with respect to the bosses 36b on the inner sleeve 32b, with each of the pairs of bosses 35a and 35b, respectively, being circumferentially offset relative to the vertical plane 41 passing through the centerline or torsional axis 40 in opposite circumferential directions at the previously-mentioned angle 70.

As shown in Figure 2B, however, after the sign-supporting members 18 (shown in Figure 3) are attached to the sign 12 and to the inner sleeve member 32a and 32b by way of the fasteners 38 and the attachment plates 45 shown in Figure 3, the respective pairs of bosses 35a and 35b are rotated circumferentially toward one another through the angles 70 to be substantially aligned with the vertical plane 41 and with each other. Such circumferential rotation relative to the fixed outer cylinder 34a and 34b, as well as the mounting clamp 64, torsionally preloads the elastomeric members 30a and 30b in opposite circumferential directions toward one another.

As discussed above, such torsional preloading of the composite subassemblies shown in Figures 1A through 1C allows the respective elastomeric members 30a and 30b to torsionally deflect and function "in parallel" with respect to one another. This arrangement results in one of the elastomeric members 30a and 30b being torsionally unloaded while the other elastomeric member is further torsionally loaded in low to moderate wind conditions. As the magnitude of the wind forces increases, however, both of the elastomeric members 30a and 30b are torsionally deflected up to the maximum predetermined amounts of torsional deflection discussed above.

Figures 2A to 3 best show the arrangement by which the outer sleeve 34a and 34b are rotationally restrained with respect to the mounting clamp 64. The radially-protruding tabs 60a and 60b and the opposite tabs 61a and 61b are interlockingly received within slots 66 on opposite sides of the mounting clamp 64. Furthermore, as the mounting clamp 62 is fixedly secured to the base bracket 24 by way of the fasteners 36, the elastomeric members 30a and 30b can be compressively preloaded, due to the axially-extending slits 42a and 42b.

The foregoing discussion discloses and describes exemplary embodiments of the present invention. One skilled in the art will readily recognise from such discussion, and from the accompanying drawings, that various changes, modifications and variations may be made therein without departing from the spirit and scope of the invention as defined in the following claims.

**Claims**

1. A method of making a torsionally preloaded torsion spring comprising:

   forming a composite axially-elongated generally cylindrical assembly having an outer rigid cylinder (34) fixedly surrounding and attached to an elastomeric cylinder (30), which is in turn fixedly surrounding and attaching to an inner rigid cylinder (32), said composite assembly having a pair of opposite free axial ends;

   forming axially elongated tabs (60, 61) protruding laterally outwardly in opposite directions from said outer rigid cylinder;

   forming mounting holes (35) extending axially through said inner rigid cylinder for mounting a pair of objects to said opposite ends at circumferentially aligned orientations, said circumferential aligned orientations being circumferentially offset at a predetermined acute angular relationship (70) with a first axial plane (41) perpendicular to a second axial plane extending through said tabs on opposite sides of said outer rigid cylinder;

   severing said composite assembly generally along a radial plane perpendicular to the axial centerline of said composite assembly and located at an axially intermediate position between the free axial ends of said composite assembly in order to form a pair of axially separable subassemblies;

rotating one of said subassemblies end-for-end in said second axial plane and disposing said rotated subassembly adjacent the non-rotated subassembly and with axially adjacent tabs on opposite lateral sides of said subassemblies being circumferentially aligned with one another in order to circumferentially misalign said mounting holes through said inner rigid cylinder of said respective subassemblies at a predetermined circumferential angular relationship with one another;

rotationally restraining said tabs on said subassemblies with respect to one another;

mounting one of said pair of objects to the free axial end of said inner rigid cylinder of said non-rotated subassembly and mounting the other of said pair of objects to the severed axial end of said inner cylinder of said rotated subassembly with said objects in said predetermined misaligned angular relationship; and

rotating said objects an the respective inner cylinders in opposite directions about their respective axes into a circumferentially aligned relationship with one another in order to torsionally preload said elastomeric cylinders of the respective subassemblies in opposite directions.

2. A method according to claim 1, wherein said predetermined acute angular relationship is approximately ten degrees.

3. A method according to claim 1 or 2 wherein said tabs are rotationally restrained by fixedly clamping said tabs to another article using a clamp member (64) having slots (66) therein for interlockingly receiving said tabs.

4. A sign stand assembly comprising a preload torsion spring produced according to any one of the preceding claims.

FIG. 1 A.

FIG. 1 B.

FIG. 1 C.

FIG. 2 A.

FIG. 2 B.

FIG. 3